# EUROPEAN PATENT SPECIFICATION

(11) **EP 2 457 020 B1**
(45) Date of publication and mention of the grant of the patent: **02.11.2016**
(21) Application number: 10742230.5
(22) Date of filing: 23.07.2010
(51) Int. Cl.: F23C 9/00, F23D 1/02, F23L 7/00, F23L 9/02, F23C 6/04, F23N 3/00

(54) **COMBUSTION APPARATUS**
VERBRENNUNGSVORRICHTUNG
APPAREIL DE COMBUSTION

(30) Priority: 23.07.2009 GB 0912769
(43) Date of publication of application: 30.05.2012
(73) Proprietor: Doosan Babcock Limited, Crawley, Sussex RH10 9AD (GB)
(72) Inventor: CAMERON, Stuart Duncan, Crawley Susssex RH10 9AD (GB); CAMERON, Euan Donald, Crawley Sussex RH10 9AD (GB)
(74) Representative: Wilson, Peter
(86) International application number: PCT/GB2010/051217
(87) International publication number: WO 2011/010161

(56) References cited:
- EP-A2- 1 992 876
- WO-A2-03/098024
- WO-A2-2006/078543
- WO-A2-2007/062019

## Description

### Introduction

The invention relates to a combustion apparatus and to a method of operating a combustion apparatus.

### Background

In conventional fossil fuel fired combustion equipment as applied to industrial and utility boilers for steam generation the oxygen required to burn the fuel is supplied via atmospheric air. The combustion of the fuel in air releases the chemical energy stored in the fuel as heat, which is then transferred to the water in the boiler to generate steam. Typically the air is supplied to the boiler via burners, which are typically of low NOx design, and via overfire air ports. The boiler may have one or, more typically, a number of burners and overfire air ports. The burners will typically comprise a fuel stream surrounded by one or more air streams; the air streams may be swirled, the swirling air providing the stabilisation of the flame on the burner. The air may be supplied individually to each burner or overfire air port via ducts, or to a group of burners or overfire air ports via a common plenum typically known as a windbox.

In the burner (or burners), the efficiency of combustion (as indicated by the level of carbon monoxide and unburned carbon that remains after combustion is complete) and propensity for the formation of nitrogen oxides (NOx) are related to the quantity of oxygen provided and the rate of mixing of the oxidising media with the combusting fuel. Since the concentration of oxygen in air is fixed, it is necessary to adjust the overall amount of air and/or the proportion of air to the individual registers, and to adjust the proportion of the air supplied to the burners and the overfire air ports to achieve the optimum system performance. However, in a system with fixed burner geometry, the scope for diverting the air from the burners to the overfire air is limited by the minimum flow requirement to the burners that is needed to generate sufficient swirling energy to maintain a stable flame.

In one implementation of the oxyfuel technology for fossil fuel fired combustion equipment, the combustion process will utilise a recycled flue gas stream to which is added upstream of the burners a pure, or nearly pure, oxygen injection stream to produce a single comburant gas which gives combustion process performance equivalent to that of conventional air firing. The oxygen concentration of the comburant gas is variable, and increases with reducing flue gas recycle rate. This approach is sometimes referred to as "simulated air" firing. A proportion of oxyfuel plant is expected to retain an air firing capability.

A feature of "simulated air" firing is that the density of the recycled flue gas and oxygen mixture is generally higher than the air which it replaces and this can lead to reduced local gas velocities within the burner, thereby impairing the stability of a burner designed for air firing when it is operated in oxyfuel combustion mode. Conversely the burner may be designed for adequate gas velocities under oxyfuel firing conditions, leading to excessive pressure drop across the burner when it is fired with air.

A combustion apparatus and a method of firing having the features specified in the preamble of claim 1 and respectively of claim 10 are know from EP 1 992 876 A2.

### Summary of Invention

According to a first aspect of the present invention, there is provided a combustion apparatus comprising: a combustion chamber, at least one burner lacated so as to detine a combustion site within the combustion chamber;
a fuel input conduit for supplying fuel to the burner;
a combustion gas input conduit for supplying combustion gas to a first stage combustion site;
an overfire gas input conduit for supplying overfire gas to a second stage combustion site;
and
gas supply means;
wherein the gas supply means is adapted to supply gas switchably between:
   a first mode of operation wherein air is supplied in suitable proportion to both the combustion gas input conduit and the overfire gas input conduit; and
   a second mode of operation wherein an oxygen containing gas other than air is supplied to the combustion gas input conduit, characterised in that in said second mode of operation substantially no gas is supplied to the overfire gas input conduit.

The term "oxygen containing gas other than air" is intended to cover a second mode gas supply that includes a proportion of oxygen to support combustion at the first stage combustion site but that is not simply air. In particular it is intended to cover a bespoke gas supply comprising substantially pure oxygen or a mixture of substantially pure oxygen or other oxygen enriched gas (that is, gas with an oxygen content by volume substantially higher than air) and a second gas, wherein the second gas is other than air, and in particular has a reduced nitrogen content relative to air. Preferably the gas supply means is adapted to selectively supply such a mixture to the combustion gas input conduit. The second gas is preferably recycled flue gas. The second mode gas supply thus preferably comprises oxygen enriched recycled flue gas, and optionally further component gases. In other words, the second mode thus comprises an "oxyfuel" firing mode.

The second mode gas supply to the combustion gas input conduit may have any proportion of oxygen capable of supporting combustion at the first combustion site. In a preferred case the second mode gas supply has a proportion of oxygen which generally gives combustion process performance equivalent to that achieved with air for example being around 20 to 50%. That is, the second mode comprises a "simulated air" oxyfuel firing mode.

The combustion apparatus is thus switchable between two modes of operation each having a different gas supply and each having a different combustion process. In the first mode the combustion apparatus is supplied with air and effects two stage combustion operation, that is, with an appreciable proportion of the total combustion air diverted from the burners to overfire air ports. In accordance with the invention, in the second mode the combustion apparatus is supplied with a bespoke gas comburant and effects a single stage combustion operation, that is, with notionally all of the oxygen containing comburant supplied via the burners and notionally no combustion gas diverted to the overfire air ports.

The invention in a first aspect thus allows the combustion apparatus to be operated selectively under air firing conditions or under oxyfuel combustion conditions, in particular "simulated air" oxyfuel combustion conditions, in a manner which optimises the combustion process without the need to change the burner geometry.

The invention in a first aspect thus comprises a combustion apparatus that is capable of operation with both air and oxyfuel combustion conditions with potential reduction in the negative impacts on flame stability, turndown performance and pressure drop arising from the higher density of flue gas compared to air.

Preferably the gas supply means is adapted to switchably supply either air or the oxygen containing gas other than air additionally to the fuel input conduit such that the gas at least assists in transporting the fuel to the combustion chamber. Thus the gas supply means is adapted to switchably supply either air or the oxygen containing gas other than air to both of the fuel input conduit and the combustion gas input conduit. Preferably the gas supply means includes varying means, such as a baffle or valve means, for varying the proportion of gas supplied to one or both or all where applicable of the fuel input conduit and the combustion gas input conduit and the overfire gas input conduit.

A combustion apparatus thus comprises a combustion chamber, at least one burner located so as to define a combustion site within the combustion chamber, a primary fuel input conduit supplying fuel to the burner, a secondary combustion gas input conduit supplying comburant gas to a first stage combustion site, and a selectively operable overfire gas input conduit supplying comburant gas to a second stage combustion site. The combustion gas input conduit may comprise plural fluidly independent input conduits, for example comprising additional tertiary or higher order input conduits, fluidly connected to the gas supply means for supplying air or oxygen containing gas to a combustion site defined by the burner. In a typical arrangement, a primary fuel input conduit may extend along a burner, a secondary combustion gas input conduit may be disposed outwardly of and for example annularly arrayed about the primary fuel input conduit, and higher order combustion gas input conduits, where present, may be disposed outwardly of and for example annularly arrayed about the secondary input conduit in familiar manner. The primary input conduit may be a central conduit extending generally axially along the burner, for example on a burner centreline. Alternatively, the primary input conduit may itself be disposed about a central conduit, for example annularly, with the central conduit serving another purpose. The primary input conduit is still preferably nearer to the centre line than the secondary and higher order conduits, but the primary stream does not necessarily flow along the centreline itself. A conduit may include suitable swirl generation structures to impart an axial swirl to a gas supply therein.

Preferably the combustion apparatus comprises a boiler for generating steam.

Preferably the fuel used is coal, most preferably pulverised coal.

Preferably the combustion apparatus includes a flue gas recirculation conduit. Preferably the flue gas recirculation conduit is fluidly connected to the gas supply means and/ or to at least one of the fuel input conduit and the combustion gas input conduit such that a mixture including flue gas may be supplied to the combustion chamber during the second mode of operation. Preferably the flue gas recirculation conduit is fluidly connected to both of the fuel input conduit and the combustion gas input conduit.

According to a further aspect of the present invention, there is provided a method of firing a burner in a combustion apparatus selectively in two modes of operation comprising in a first mode of operation:
supplying fuel to the burner;
supplying combustion gas comprising air to a first stage combustion site;
supplying overfire gas comprising air to a second stage combustion site;
causing combustion of fuel to occur in a two stage process; and in a second mode of operation:
supplying fuel to the burner;
supplying combustion gas comprising an oxygen containing gas other than air to a first stage combustion site,
characterised in that in said second mode of operation combustion of fuel is caused to occur in a single stage process.

Preferably the oxygen containing gas comprises a mixture of substantially pure oxygen and a second gas having a reduced oxygen concentration relative to air and/ or a reduced nitrogen concentration relative to air. In a preferred embodiment of the second mode, combustion gases are supplied to the combustion site in such manner that the resultant mixture has a proportion of oxygen that produces combustion process performance equivalent to that achieved with air, for example being around 20 to 50%.

Other preferred aspects of the method, and in particular modes of operation and gas compositions, will be appreciated by analogy.

### Summary of Figures

The invention is described by way of example only with reference to figures 1 to 3 of the accompanying drawings in which:
Figure 1 is a schematic of a burner suitable for both conventional air firing and oxyfuel firing,
Figure 2 is a schematic of the overfire principle;
Figure 3 is a schematic of the oxyfuel process.

### Specific Description

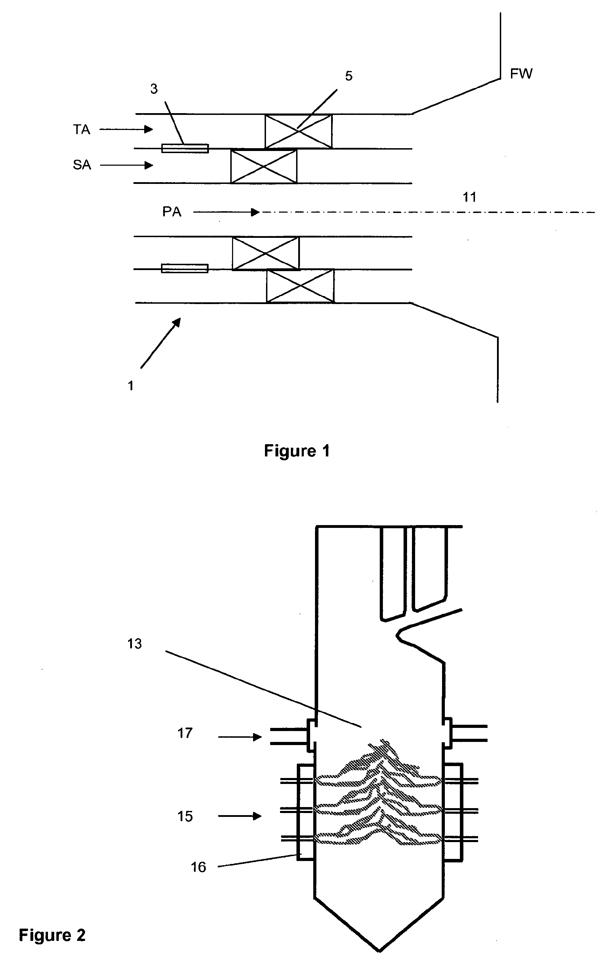

Figure 1 is a schematic of a simple burner suitable for both air firing and oxyfuel firing.

In an air fired mode the combustion air, containing the required oxygen to burn the fuel, is supplied by means of a forced draught fan (FD fan) to individual burners via air ducts, or to groups of burners through a windbox. In the example shown, there are three separate air streams in the burner (1); the primary air (PA) which conveys the coal, the secondary air (SA), and the tertiary air (TA); specific burner designs may have fewer or more air streams. In the example shown, the primary air (PA) stream follows the burner axis (11) and the secondary air (SA), and the tertiary air (TA) streams are axially directed in ducts concentrically therearound. The burner (1) is fired through an outlet in a furnace wall (FW).

In the embodiment the primary air stream is in a central conduit. One alternative design option involves moving the primary air (or PFGR/Oxygen/Fuel mix) to a conduit annularly parallel to the central line, but with a central cylinder along the axis used for other purposes (core air and/or for oil/gas igniters). In this case, the primary stream would still be nearer the centre line than the secondary and tertiary streams, but wouldn't flow along the actual centerline.

Dampers (3) control the division of the air between the secondary and tertiary streams (SA, TA). The secondary and tertiary air streams may be swirled, and the extent of swirl may be adjustable. Swirl devices (5) are provided downstream of the dampers for this purpose. Optimisation of the burner with respect to combustion efficiency, emissions, and flame stability is achieved by variation of the total quantity of the air supplied to the burner, the division of the air between the various streams, and the level of swirl applied.

For NOx control a proportion of the total combustion air may be diverted away from the burners as overfire air, and the flow area of the secondary and tertiary annuli may be reduced in proportion so as to maintain the air velocities within the burner registers, and hence maintain the flame stabilisation effect induced by the swirl generation. Figure 2 is a general schematic of the overfire principle, with overfire ports located generally above the burners which may be of the general form illustrated in Figure 1.

The figure shows a typical coal-fired power station arrangement. A combustion chamber (13) is supplied with coal and combustion air via a multiplicity of burners (15). The air supply to each burner is split into primary air (to convey the coal), and secondary and tertiary air to the windbox (16) (the split being to control the mixing and aerodynamics in a low NOx burner). In modern plant a proportion of the combustion air is supplied separately as overfire air through a multiplicity of ports (17) (generally above the burners) to facilitate NOx control.

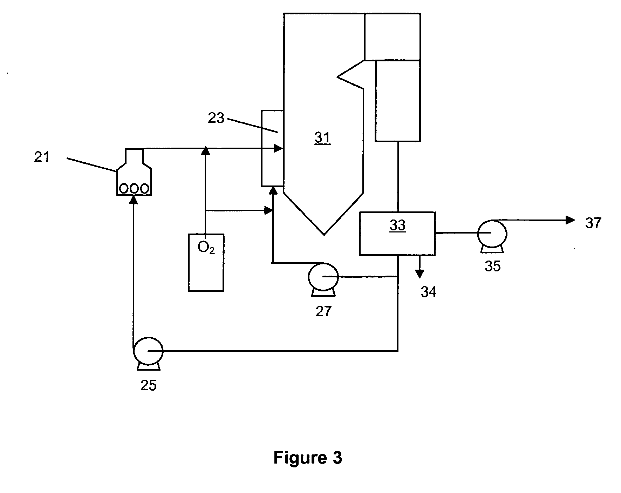

Figure 3 is a schematic of the oxyfuel process.

In the "simulated air" exemplification of oxyfuel firing shown here, flue gas is recycled to the coal pulverising mill (21) (primary flue gas recycle, or PFGR) and to the windbox (23) containing the burners (not specifically shown in figure 3) (secondary flue gas recycle, or SFGR) by means of dedicated fans (respectively the primary flue gas recycle fan 25 and the secondary flue gas recycle fan 27); there are numerous detailed variants of this process, but they all follow the same generic method.

The composition of the recycled flue gas is related to the combustion process, but the stream extracted from the boiler exit will contain low levels of oxygen, typically less than 5% by volume, and insufficient to support combustion. Pure, or nearly pure, oxygen is introduced into the PFGR and SFGR streams to provide the oxidant required to combust the fuel. The composition of the PFGR and SFGR streams will depend upon the detailed implementation of the oxyfuel technology, but typically the PFGR will contain around 20 to 25% by volume of oxygen or higher, whereas the SFGR will contain a significantly higher oxygen concentration, for example 25 to 50% . The exact concentration levels will be dependent upon a number of factors including the overall furnace stoichiometry, the quantity of flue gas that is recycled to the boiler, the amount of combustion generated moisture that is removed from the recycle stream, the amount of air that leaks into the process, etc.

The streams supply burners (not specifically shown) via the windbox (23) to fire the furnace/ boiler (31) in generally known manner, with flue gases being drawn off via a particulate removal system (33) to remove solids (ash, etc, 34) and drawn by means of an induced draught (ID) fan (35) to a stack or capture stage (37) as will be familiar.

A key process design parameter for the "simulated air" implementation of oxyfuel technology is the quantity of recycled flue gas, usually expressed as a percentage of the total flow in the boiler. This parameter is selected on the basis of maintaining, as far as is possible, the radiative and convective heat transfer properties of an oxyfuel fired boiler relative to air firing; recycle gas flow rates of between 60% and 80% of the boiler gas flow are often quoted. Based upon these typical quantities, and the physical properties of the oxygen / recycled flue gas mixture, it is possible to establish the velocities within the burner when it is operated under "simulated air" oxyfuel firing conditions. As noted previously, gas velocities within the burner are lower for oxyfuel firing than for air firing.

Consider by way of illustration a "Combustion Apparatus A" comprising a simple conventional air-fire operation, and a "Combustion Apparatus B" comprising a stage fired operation switchable in accordance with the present invention. Example operational data are set out in the table below.

| **Non-Dimensionalised** | | | | | | | |
|---|---|---|---|---|---|---|---|
| | | | | Combustion Apparatus A | | Combustion Apparatus Burner B | |
| | | | | Air | Oxyfuel | Air | Oxyfuel |
| | | | | | | | |
| Burner Stoichiometry (-) | | | | 1.17 | 1.17 | 1.00 | 1.17 |
| | | | | | | | |
| Mass Flow (%) | | | | | | | |
| | | Primary | | 19 | 22 | 19 | 22 |
| | | Secondary + Core | | 15 | 12 | 13 | 12 |
| | | Tertiary | | 66 | 66 | 53 | 66 |
| | | Overfire | | 0 | 0 | 15 | 0 |
| | | | | | ====== | ====== | ====== |
| | | Total | | 100 | 100 | 100 | 100 |
| Velocity (%age change) | | | | | | | |
| | | Primary | | base | 7.9 | base | 7.9 |
| | | Tertiary | | base | -20.7 | base | -2.4 |

Consider "Combustion Apparatus A". This represents a typical unstaged low NOx burner. The primary air velocity is selected to ensure the effective conveying of the transported coal dust to the burner exit, while the tertiary air velocity is selected to ensure sufficient forward momentum through the swirl generators to achieve the required aerodynamics.

In moving to oxyfuel combustion the air is replaced by recycled flue gas (FGR), comprising predominantly CO₂ and H₂O. The density of the FGR is greater than that of the air which it replaces. Thus there are a number of consequences arising from the operation of "Combustion Apparatus A" under oxyfuel conditions:
1) The mass of primary FGR is greater than the mass of primary air so that the primary velocity is maintained at a similar value to the air firing case
2) The mass of tertiary FGR is correspondingly reduced from the value it would otherwise have been
3) Furthermore the density of the tertiary FGR is greater than air
4) The velocity of the tertiary FGR is significantly lower than that of the tertiary air
5) The reduced mass flow and velocity leads to lower tertiary FGR momentum compared to air firing, with an adverse impact on flame aerodynamics

As a result, "Combustion Apparatus A" cannot be operated in both air and oxyfuel firing modes without modification.

Now consider "Combustion Apparatus B". This is an air fired burner designed to operate under air staging conditions (where some of the combustion air is diverted away from the burners to overfire air ports). The primary air velocity is maintained to ensure the effective conveying of the coal to the burner outlet as previously, and the burner diameter is reduced so that the tertiary air velocity is maintained at the previous value in spite of the reduced mass flow.

According to the invention, operating "Combustion Apparatus B" under unstaged oxyfuel firing at the same conditions as defined previously for "Combustion Apparatus A" demonstrates that, by retaining all the FGR flow through the burner, both the primary and tertiary FGR velocities can be maintained at the same value as the staged air combustion operating conditions. Thus "Combustion Apparatus B" can be operated in both air firing and oxyfuel firing modes by provision merely of suitable means to switch supply conditions between the two modes and without any substantive modification to burner geometry.

The invention thus comprises a design of a combustion apparatus that can operate under either air firing or oxyfuel ("simulated air") firing without the need for geometric or other process changes. The combustion apparatus is sized to operate under air staging conditions with a stoichiometric air to fuel ratio lower than that typical of single stage operation. When operating this combustion apparatus with the increased mass flowrate for single stage oxyfuel combustion the gas velocities within the combustion apparatus approach those for conventional staged air firing, and the performance of the combustion apparatus with regard to both flame stability, load reduction, and pressure drop is unimpaired.

The combustion apparatus can be operated under air firing conditions. The invention allows the same combustion apparatus to be operated under "simulated air" oxyfuel combustion conditions.

The invention allows both of the above without the need to change the geometry, settings, or relative flow splits between secondary and tertiary (or other) registers of the combustion apparatus.

The invention allows the combustion apparatus to operate in air or oxyfuel mode with acceptable velocities for the maintenance of both flame stability and acceptable pressure drop across the full normal operational load range of 40% to 110% of the normal rated combustion apparatus capacity.

## Claims

1. A combustion apparatus comprising:
a. a combustion chamber (13);
b. at least one burner (15) located so as to define a combustion site within the combustion chamber;
c. a fuel input conduit for supplying fuel to the burner;
d. a combustion gas input conduit for supplying combustion gas to a first stage combustion site;
e. an overfire gas input conduit (17) for supplying overfire gas to a second stage combustion site; and
f. gas supply means;
wherein the gas supply means is adapted to supply gas switchably between:
a first mode of operation wherein air is supplied in suitable proportion to both the combustion gas input conduit and the overfire gas input conduit; and
a second mode of operation wherein an oxygen containing gas other than air is supplied to the combustion gas input conduit, **characterised in that** in said second mode of operation substantially no gas is supplied to the overfire gas input conduit.

2. A combustion apparatus in accordance claim 1 wherein the gas supply means is adapted to switchably supply either air or the oxygen containing gas other than air additionally to the fuel input conduit such that the gas at least assists in transporting the fuel to the combustion chamber.

3. A combustion apparatus in accordance with any preceding claim wherein the gas supply means includes varying means for varying the proportion of gas supplied to one or both or all where applicable of the fuel input conduit and the combustion gas input conduit and the overfire gas input conduit.

4. A combustion apparatus in accordance with any preceding claim wherein the combustion gas input conduit comprises plural fluidly independent input conduits fluidly connected to the gas supply means.

5. A combustion apparatus in accordance with any preceding claim comprising a boiler for generating steam.

6. A combustion apparatus in accordance with any preceding claim comprising a fuel supply of pulverised coal.

7. A combustion apparatus in accordance with any preceding claim including a first combustion gas input conduit comprising a part of the burner and at least one further fluidly independent combustion gas input conduit fluidly connected to the gas supply means for supplying gas directly to at least one of the burner and another component of the combustion apparatus.

8. A combustion apparatus in accordance with any preceding claim including a flue gas recirculation conduit.

9. A combustion apparatus in accordance with claim 8 wherein the flue gas recirculation conduit is fluidly connected to the gas supply means and/ or to at least one of the fuel input conduit and the combustion gas input conduit such that a mixture including flue gas may be supplied to the combustion chamber in use in the second mode of operation.

10. A method of firing a burner (15) in a combustion apparatus comprising firing the burner selectively in one of two modes of operation, comprising in a first mode of operation:
supplying fuel to the burner;
supplying combustion gas comprising air to a first stage combustion site;
supplying overfire gas comprising air to a second stage combustion site;
causing combustion of fuel to occur in a two stage process;
and in a second mode of operation:
supplying fuel to the burner;
supplying combustion gas comprising an oxygen containing gas other than air to a first stage combustion site,
**characterised in that** in said second mode of operation combustion of fuel is caused to occur in a single stage process.

11. A method in accordance with claim 10 wherein the gas supply means is adapted to supply an oxygen containing gas other than air comprising a mixture of an oxygen enriched gas and a second gas.

12. A method in accordance with claim 11 wherein the oxygen enriched gas is substantially pure oxygen.

13. A method in accordance with claim 11 or 12 wherein the second gas has a reduced nitrogen content relative to air.

14. A method in accordance with claim 13 wherein the second gas is recycled flue gas.

15. A method in accordance with any one of claims 10 to 14 wherein the oxygen containing gas supply has a proportion of oxygen which gives a combustion process performance generally equivalent to that achieved with air, for example being around 20 to 50% by volume.

## Patentansprüche

1. Eine Verbrennungsvorrichtung, die Folgendes beinhaltet:
a. eine Verbrennungskammer (13);
b. mindestens einen Brenner (15), der angeordnet ist, um eine Verbrennungsstelle innerhalb der Verbrennungskammer zu definieren;
c. eine Brennstoffzufuhrleitung, um Brennstoff an den Brenner zu liefern;
d. eine Verbrennungsgaszufuhrleitung, um Verbrennungsgas an eine Verbrennungsstelle der ersten Stufe zu liefern;
e. eine Obergaszufuhrleitung (17), um Obergas an eine Verbrennungsstelle der zweiten Stufe zu liefern; und
f. Mittel zur Gaslieferung;
wobei das Mittel zur Gaslieferung ausgeführt ist, um Gas schaltbar zwischen den Folgenden zu liefern:
einem ersten Betriebsmodus, in dem Luft in geeigneten Verhältnissen an sowohl die Verbrennungsgaszufuhrleitung als auch die Obergaszufuhrleitung geliefert wird; und
einem zweiten Betriebsmodus, wobei ein Sauerstoff enthaltendes Gas außer Luft an die Verbrennungsgaszufuhrleitung geliefert wird, **dadurch gekennzeichnet,**
**dass** in dem zweiten Betriebsmodus im Wesentlichen kein Gas an die Obergaszufuhrleitung geliefert wird.

2. Verbrennungsvorrichtung gemäß Anspruch 1, wobei das Mittel zur Gaslieferung ausgeführt ist, um entweder Luft oder das Sauerstoff enthaltende Gas außer Luft zusätzlich an die Brennstoffzufuhrleitung schaltbar zu liefern, so dass das Gas mindestens beim Transportieren des Brennstoffs zu der Verbrennungskammer hilft.

3. Verbrennungsvorrichtung gemäß einem der vorhergehenden Ansprüche, wobei das Mittel zur Gaslieferung variierende Mittel zum Variieren des Verhältnisses von Gas, das an eine oder beide oder alle, wo zutreffend, der Brennstoffzufuhrleitung und der Verbrennungsgaszufuhrleitung und der Obergaszufuhrleitung geliefert wird, umfasst.

4. Verbrennungsvorrichtung gemäß einem der vorhergehenden Ansprüche, wobei die Verbrennungsgaszufuhrleitung mehrere fluidmäßig unabhängige Zufuhrleitungen beinhaltet, die fluidmäßig mit dem Mittel zur Gaslieferung verbunden sind.

5. Verbrennungsvorrichtung gemäß einem der vorhergehenden Ansprüche, die einen Kessel zum Erzeugen von Dampf beinhaltet.

6. Verbrennungsvorrichtung gemäß einem der vorhergehenden Ansprüche, die eine Brennstofflieferung von Staubkohle beinhaltet.

7. Verbrennungsvorrichtung gemäß einem der vorhergehenden Ansprüche, die eine erste Verbrennungsgaszufuhrleitung umfasst, die einen Teil des Brenners und mindestens eine weitere fluidmäßig unabhängige Verbrennungsgaszufuhrleitung beinhaltet, die fluidmäßig mit dem Mittel zur Gaslieferung verbunden ist, um Gas direkt an mindestens einen des Brenners und einer anderen Komponente der Verbrennungsvorrichtung zu liefern.

8. Verbrennungsvorrichtung gemäß einem der vorhergehenden Ansprüche, die eine Leitung zur Abgasrezirkulation umfasst.

9. Verbrennungsvorrichtung gemäß Anspruch 8, wobei die Leitung zur Abgasrezirkulation fluidmäßig mit dem Mittel zur Gaslieferung und/oder mindestens einer der Brennstoffzufuhrleitung oder der Verbrennungsgaszufuhrleitung verbunden ist, so dass eine Mischung, die Abgas umfasst, an die Verbrennungskammer, die in dem zweiten Betriebsmodus verwendet wird, geliefert werden kann.

10. Ein Verfahren zum Anheizen eines Brenners (15) in einer Verbrennungsvorrichtung, das das selektive Anheizen des Brenners in einem von zwei Betriebsmodi beinhaltet, beinhaltend in einem ersten Betriebsmodus:
Liefern von Brennstoff an den Brenner;
Liefern von Luft beinhaltendem Verbrennungsgas an eine Verbrennungsstelle der ersten Stufe;
Liefern von Luft beinhaltendem Obergas an eine Verbrennungsstelle der zweiten Stufe;
Bewirken, dass Verbrennung von Brennstoff in einem Zweistufenvorgang auftritt;
und in einem zweiten Betriebsmodus:
Liefern von Brennstoff an den Brenner;
Liefern von Verbrennungsgas, das ein Sauerstoff enthaltendes Gas außer Luft beinhaltet, an eine Verbrennungsstelle der ersten Stufe;
**dadurch gekennzeichnet, dass** die Verbrennung von Brennstoff in dem zweiten Betriebsmodus bewirkt wird, um in einem Einstufenvorgang aufzutreten.

11. Verfahren gemäß Anspruch 10, wobei das Mittel zur Gaslieferung ausgeführt ist, um ein Sauerstoff enthaltendes Gas außer Luft, das eine Mischung aus mit Sauerstoff angereichertem Gas und einem zweiten Gas beinhaltet, zu liefern.

12. Verfahren gemäß Anspruch 11, wobei das mit Sauerstoff angereicherte Gas im Wesentlichen reiner Sauerstoff ist.

13. Verfahren gemäß Anspruch 11 oder 12, wobei das zweite Gas relativ zu Luft einen verringerten Stickstoffgehalt aufweist.

14. Verfahren gemäß Anspruch 13, wobei das zweite Gas wiederaufbereitetes Abgas ist.

15. Verfahren gemäß einem der Ansprüche 10 bis 14, wobei die Sauerstoff enthaltende Gaszufuhr einen Anteil an Sauerstoff aufweist, der eine Verbrennungsvorgangsleistung ergibt, die im Wesentlichen derjenigen entspricht, die mit Luft erzielt wird, zum Beispiel 20 bis 50 Volumenprozent.

## Revendications

1. Un appareil de combustion comprenant :
a. une chambre de combustion (13) ;
b. au moins un brûleur (15) situé de manière à définir un site de combustion au sein de la chambre de combustion ;
c. un conduit d'admission de combustible pour amener du combustible au brûleur ;
d. un conduit d'admission de gaz de combustion pour amener du gaz de combustion à un site de combustion de premier étage ;
e. un conduit d'admission de gaz de surcombustion réductrice (17) pour amener du gaz de surcombustion réductrice à un site de combustion de deuxième étage ; et
f. un moyen d'amenée de gaz ;
dans lequel le moyen d'amenée de gaz est conçu pour amener du gaz de manière commutable entre :
un premier mode de fonctionnement dans lequel de l'air est amené en proportion adéquate à la fois au conduit d'admission de gaz de combustion et au conduit d'admission de gaz de surcombustion réductrice ; et
un deuxième mode de fonctionnement dans lequel un gaz oxygéné autre que de l'air est amené au conduit d'admission de gaz de combustion, **caractérisé en ce que** dans ledit deuxième mode de fonctionnement il n'est amené substantiellement aucun gaz au conduit d'admission de gaz de surcombustion réductrice.

2. Un appareil de combustion conformément à la revendication 1 dans lequel le moyen d'amenée de gaz est conçu pour amener de manière commutable soit de l'air, soit le gaz oxygéné autre que de l'air en sus au conduit d'admission de combustible de telle sorte que le gaz aide au moins à transporter le combustible à la chambre de combustion.

3. Un appareil de combustion conformément à n'importe quelle revendication précédente dans lequel le moyen d'amenée de gaz inclut des moyens variateurs pour faire varier la proportion de gaz amené à l'un ou l'autre, ou à l'un et l'autre, ou à l'ensemble le cas échéant du conduit d'admission de combustible, du conduit d'admission de gaz de combustion et du conduit d'admission de gaz de surcombustion réductrice.

4. Un appareil de combustion conformément à n'importe quelle revendication précédente dans lequel le conduit d'admission de gaz de combustion comprend de multiples conduits d'admission fluidiquement indépendants raccordés fluidiquement au moyen d'amenée de gaz.

5. Un appareil de combustion conformément à n'importe quelle revendication précédente comprenant une chaudière pour générer de la vapeur.

6. Un appareil de combustion conformément à n'importe quelle revendication précédente comprenant une amenée en combustible de charbon pulvérisé.

7. Un appareil de combustion conformément à n'importe quelle revendication précédente incluant un premier conduit d'admission de gaz de combustion comprenant une partie du brûleur et au moins un conduit d'admission de gaz de combustion fluidiquement indépendant supplémentaire raccordé fluidiquement au moyen d'amenée de gaz pour amener du gaz directement à au moins un élément parmi le brûleur et un autre composant de l'appareil de combustion.

8. Un appareil de combustion conformément à n'importe quelle revendication précédente incluant un conduit de recirculation de gaz de carneau.

9. Un appareil de combustion conformément à la revendication 8 dans lequel le conduit de recirculation de gaz de carneau est raccordé fluidiquement au moyen d'amenée de gaz et/ou à au moins un conduit parmi le conduit d'admission de combustible et le conduit d'admission de gaz de combustion de telle sorte qu'un mélange incluant du gaz de carneau puisse être amené à la chambre de combustion lors de l'utilisation dans le deuxième mode de fonctionnement.

10. Une méthode d'alimentation d'un brûleur (15) dans un appareil de combustion comprenant le fait d'alimenter le brûleur sélectivement dans l'un de deux modes de fonctionnement, comprenant dans un premier mode de fonctionnement le fait :
d'amener du combustible au brûleur ;
d'amener du gaz de combustion comprenant de l'air à un site de combustion de premier étage ;
d'amener du gaz de surcombustion réductrice comprenant de l'air à un site de combustion de deuxième étage ;
de faire en sorte que la combustion de combustible se produise selon un
processus à deux étages ;
et dans un deuxième mode de fonctionnement le fait :
d'amener du combustible au brûleur ;
d'amener du gaz de combustion comprenant un gaz oxygéné autre que de l'air à un site de combustion de premier étage ;
**caractérisée en ce que** dans ledit deuxième mode de fonctionnement il est fait en sorte que la combustion de combustible se produise selon un processus à un étage.

11. Une méthode conformément à la revendication 10 dans laquelle le moyen d'amenée de gaz est conçu pour amener un gaz oxygéné autre que de l'air comprenant un mélange d'un gaz enrichi en oxygène et d'un deuxième gaz.

12. Une méthode conformément à la revendication 11 dans laquelle le gaz enrichi en oxygène est de l'oxygène substantiellement pur.

13. Une méthode conformément à la revendication 11 ou à la revendication 12 dans laquelle le deuxième gaz présente une teneur en azote réduite par rapport à l'air.

14. Une méthode conformément à la revendication 13 dans laquelle le deuxième gaz est du gaz de carneau recyclé.

15. Une méthode conformément à l'une quelconque des revendications 10 à 14 dans laquelle l'amenée de gaz oxygéné présente une proportion d'oxygène qui donne une performance de processus de combustion généralement équivalente à celle obtenue avec de l'air, se situant par exemple aux alentours de 20 à 50 % en volume.
